# EUROPEAN PATENT APPLICATION

(11) **EP 4 683 362 A1**
(43) Date of publication of application: **21.01.2026**
(21) Application number: 23926830.3
(22) Date of filing: 16.03.2023
(51) Int. Cl.: H04W 8/24, H04W 64/00

(54) **INFORMATION INDICATION METHODS, APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2023/082000
(87) International publication number: WO 2024/187478

(57) **Abstract**

Provided in the embodiments of the present disclosure are information indication methods. A method is executed by an access network device, and the method comprises: sending state indication information of a terminal to a first network function, the state indication information being used for indicating the terminal is a remote terminal or the terminal is a non-remote terminal. Here, since the access network device will send to the first network function the state indication information used for indicating the terminal is a remote terminal or the terminal is a non-remote terminal, after the state of the terminal changes, the first network function can determine the state of the terminal on the basis of the state indication information. Compared with that in situations where it is indeterminable whether the terminal is a remote terminal or a non-remote terminal, the reliability of wireless positioning can be improved during wireless positioning processes.

## Description

### TECHNICAL FIELD

The present disclosure relates, but is not limited, to the field of wireless communication technology, in particular, to an information indication method, an information indication apparatus, a communication device, and a storage medium.

### BACKGROUND

A Sidelink (SL) relay terminal has been introduced in wireless communication technology, allowing a remote terminal or a remote UE to access the network through the SL relay terminal.

### SUMMARY

Embodiments of the present disclosure provide an information indication method, an information indication apparatus, a communication device, and a storage medium.

According to a first aspect, embodiments of the present disclosure provide an information indication method, which is performed by an access network device, and includes:
sending state indication information of a terminal to a first network function;
wherein the state indication information is configured to indicate whether the terminal is a remote terminal or a non-remote terminal.

In some embodiments, sending the state indication information of the terminal to the first network function, includes:
sending the state indication information of the terminal to the first network function through a New Radio Positioning Protocol A (NRPPa) message associated with the terminal.

In some embodiments, sending the state indication information of the terminal to the first network function, includes one of:
sending the state indication information to the first network function through a positioning information response message;
sending the state indication information to the first network function through a positioning information update message;
sending the state indication information to the first network function through a positioning information failure message; and
sending the state indication information of the terminal to the first network function through a measurement pre-configuration refuse message.

In some embodiments, sending the state indication information to the first network function through the positioning information response message, includes:
in response to receiving a first positioning information request message sent by the first network function and determining that the terminal is the remote terminal, sending the state indication information to the first network function through the positioning information response message;
wherein the first positioning information request message is used to request configuring a periodic uplink positioning reference signal.

In some embodiments, sending the state indication information to the first network function through the positioning information update message, includes:
in response to determining that the terminal transitions from a state of being the non-remote terminal to a state of being the remote terminal and updating an uplink positioning reference signal of the terminal, sending the state indication information to the first network function through the positioning information update message.

In some embodiments, sending the state indication information to the first network function through the positioning information failure message, includes:
in response to receiving a second positioning information request message sent by the first network function and determining that the terminal is the remote terminal, sending the state indication information to the first network function through the positioning information failure message;
wherein the second positioning information request message is used to request configuring an aperiodic uplink positioning reference signal or a semi-persistent uplink positioning reference signal for the terminal.

In some embodiments, the method further includes:
receiving a third positioning information request message sent by the first network function;
wherein the third positioning information request message is used to request configuring a periodic uplink positioning reference signal for the terminal.

In some embodiments, sending the state indication information of the terminal to the first network function through the measurement pre-configuration refuse message, includes:
in response to receiving a measurement pre-configuration request message sent by the first network function and determining that the terminal is the remote terminal, sending the state indication information of the terminal to the first network function through the measurement pre-configuration refuse message;
wherein the measurement pre-configuration request message is used to request configuring a Positioning Reference Signal Processing Window (PPW) or a pre-configured Measurement Gap (MG) for the terminal.

In some embodiments, an information field of the positioning information failure message and/or an information field of the measurement pre-configuration refuse message includes a reason value information field, and the reason value information field indicates that the terminal is the remote terminal.

In some embodiments, the first network function is a Location Management Function (LMF).

According to a second aspect, embodiments of the present disclosure provide an information indication method, which is performed by a first network function, and includes:
receiving state indication information of a terminal sent by an access network device;
wherein the state indication information is configured to indicate whether the terminal is a remote terminal or a non-remote terminal.

In some embodiments, receiving the state indication information of the terminal sent by the access network device, includes:
receiving the state indication information of the terminal sent by the access network device through an NRPPa message associated with the terminal.

In some embodiments, receiving the state indication information of the terminal sent by the access network device, includes one of:
receiving the state indication information of the terminal sent by the access network device through a positioning information response message;
receiving the state indication information of the terminal sent by the access network device through a positioning information update message;
receiving the state indication information of the terminal sent by the access network device through a positioning information failure message; and
receiving the state indication information of the terminal sent by the access network device through a measurement pre-configuration refuse message.

In some embodiments, before receiving the state indication information of the terminal sent by the access network device through the positioning information response message, the method further includes:
sending a first positioning information request message to the access network device;
wherein the first positioning information request message is used to request configuring a periodic uplink positioning reference signal.

In some embodiments, before receiving the state indication information of the terminal sent by the access network device through the positioning information failure message, the method further includes:
sending a second positioning information request message to the access network device;
wherein the second positioning information request message is used to request configuring an aperiodic uplink positioning reference signal or a semi-persistent uplink positioning reference signal for the terminal.

In some embodiments, the method further includes:
sending a third positioning information request message to the access network device;
wherein the third positioning information request message is used to request configuring a periodic uplink positioning reference signal for the terminal.

In some embodiments, before receiving the state indication information of the terminal sent by the access network device through the measurement pre-configuration refuse message, the method further includes:
sending a measurement pre-configuration request message to the access network device;
wherein the measurement pre-configuration request message is used to request configuring a PPW or a pre-configured Measurement Gap (MG) for the terminal.

In some embodiments, an information field of the positioning information failure message and/or an information field of the measurement pre-configuration refuse message includes a reason value information field, and the reason value information field indicates that the terminal is the remote terminal.

In some embodiments, the first network function is a Location Management Function (LMF).

According to a third aspect, embodiments of the present disclosure provide an information indication apparatus, which includes:
a sending module configured to send state indication information of a terminal to a first network function;
wherein the state indication information is configured to indicate whether the terminal is a remote terminal or a non-remote terminal.

According to a fourth aspect, embodiments of the present disclosure provide an information indication apparatus, which includes:
a receiving module configured to receive state indication information of a terminal sent by an access network device;
wherein the state indication information is configured to indicate whether the terminal is a remote terminal or a non-remote terminal.

According to a fifth aspect, embodiments of the present disclosure provide a communication device, including:
a processor; and
a memory configured for storing executable instructions for the processor;
wherein the processor is configured to execute the executable instructions to perform the method described in any embodiment of the present disclosure.

According to a sixth aspect, embodiments of the present disclosure provide a computer storage medium, which stores a computer executable program, and when the computer executable program is executed by a processor, the method described in any embodiment of the present disclosure is caused to be performed.

According to a seventh aspect, embodiments of the present disclosure provide a communication system including an access network device and a first network function, wherein the access network device is configured to perform any of the methods performed by the access network device in embodiments of the present disclosure, and the first network function is configured to perform any of the methods performed by the first network function in embodiments of the present disclosure.

In embodiments of the present disclosure, the state indication information of the terminal is sent to the first network function, and the state indication information is configured to indicate whether the terminal is a remote terminal or a non-remote terminal. Due to the fact that the access network device will send the state indication information configured to indicate whether the terminal is a remote terminal or a non-remote terminal to the first network function, the first network function can determine the state of the terminal based on the state indication information after the state of the terminal changes, which can improve the reliability of the wireless positioning, compared to the situation where it cannot be determined whether the terminal is a remote terminal or a non-remote terminal during the wireless positioning process.

### BRIEF DESCRIPTION OF THE DRAWINGS

FIG. 1 is a schematic diagram of a structure of a wireless communication system according to one or more embodiments of the present disclosure.
FIG. 2 is a schematic diagram of a User Plane Protocol Stack according to one or more embodiments of the present disclosure.
FIG. 3 is a schematic diagram of a Control Plane Protocol Stack according to one or more embodiments of the present disclosure.
FIG. 4 is a schematic flowchart of an information indication method according to one or more embodiments of the present disclosure.
FIG. 5 is a schematic flowchart of an information indication method according to one or more embodiments of the present disclosure.
FIG. 6 is a schematic flowchart of an information indication method according to one or more embodiments of the present disclosure.
FIG. 7 is a schematic flowchart of an information indication method according to one or more embodiments of the present disclosure.
FIG. 8 is a schematic flowchart of an information indication method according to one or more embodiments of the present disclosure.
FIG. 9 is a schematic flowchart of an information indication method according to one or more embodiments of the present disclosure.
FIG. 10 is a schematic flowchart of an information indication method according to one or more embodiments of the present disclosure.
FIG. 11 is a schematic flowchart of an information indication method according to one or more embodiments of the present disclosure.
FIG. 12 is a schematic flowchart of an information indication method according to one or more embodiments of the present disclosure.
FIG. 13 is a schematic flowchart of an information indication method according to one or more embodiments of the present disclosure.
FIG. 14 is a schematic flowchart of an information indication method according to one or more embodiments of the present disclosure.
FIG. 15 is a schematic diagram of an information indication apparatus according to one or more embodiments of the present disclosure.
FIG. 16 is a schematic diagram of an information indication apparatus according to one or more embodiments of the present disclosure.
FIG. 17 is a schematic diagram of a communication system according to one or more embodiments of the present disclosure.
FIG. 18 is a schematic diagram of a structure of a terminal according to one or more embodiments of the present disclosure.
FIG. 19 is a block diagram of a base station according to one or more embodiments of the present disclosure.

### DETAILED DESCRIPTION

Exemplary embodiments will be described in detail here, with examples shown in the drawings. When the following description refers to the drawings, unless otherwise indicated, the same reference numerals in different drawings represent the same or similar elements. The embodiments described in the following exemplary embodiments do not represent all embodiments consistent with the present disclosure. On the contrary, they are only examples of devices and methods consistent with some aspects of the present disclosure as described in the appended claims.

The terms used in embodiments of the present disclosure are for the purpose of description of specific embodiments only, and are not intended to limit the embodiments of the present disclosure. Singular forms such as "a" and "the" used in the present disclosure and the appended claims are also intended to include plural forms, unless other meanings are clearly indicated in the context. It should also be understood that the term "and/or" used in the present disclosure refers to and includes any or all possible combinations of one or more listed items related.

It should be understood that although terms such as first, second, and third may be used to describe various information in embodiments of the present disclosure, such information should not be limited to these terms, which are only used to distinguish information of the same type from each other. For example, without departing from the scope of the present disclosure, the first information can also be referred to as the second information, and similarly, the second information can also be referred to as the first information. The word "if" used herein can be interpreted as "when" or "while" or "in response to determination that", depending on the context.

For the purpose of simplicity and ease of understanding, the terms used herein to characterize size relationships are "greater than" or "less than". But for those skilled in the art, it can be understood that the term "greater than" also encompasses the meaning of "greater than or equal to", and "less than" also encompasses the meaning of "less than or equal to".

The Sidelink (SL) relay terminal has been introduced in the wireless communication technology, allowing the remote terminal or the remote UE to access the network through the SL relay terminal.

In the related art, the terminal can send location capability indication information configured to indicate the state of the terminal (for example, the state of the terminal is that the terminal is a remote terminal) to a Location Management Function (LMF). However, during the positioning process, the state of the terminal may change, and LMF may not be able to determine whether the state of the terminal has changed.

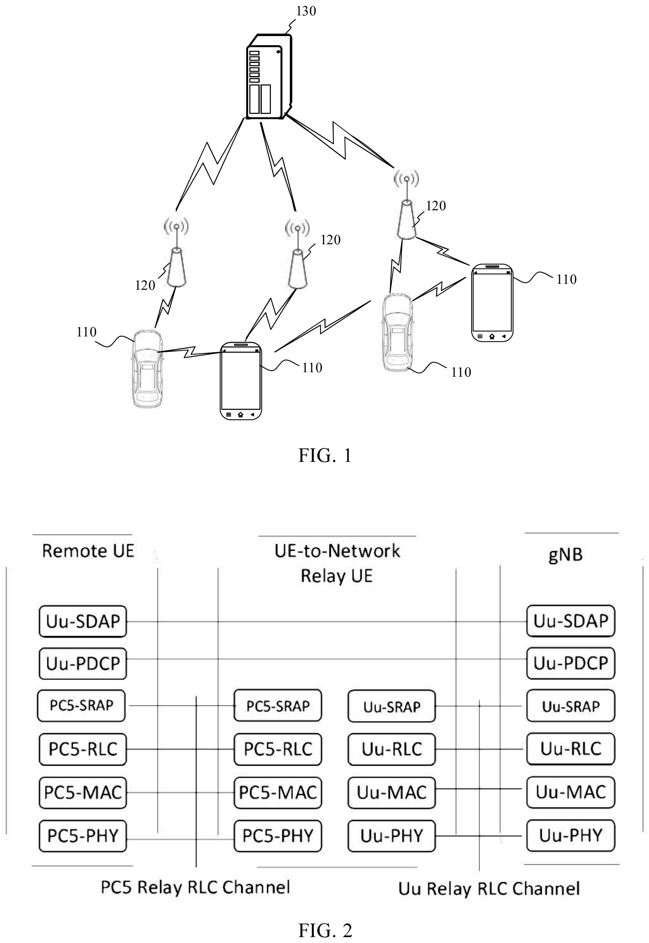

FIG. 1 shows a schematic diagram of a structure of a wireless communication system provided by embodiments of the present disclosure. As shown in FIG. 1, the wireless communication system is a communication system based on mobile communication technology, which can include several user equipment 110 and several base stations 120. It should be noted that the user equipment (UE) in the present disclosure can be a terminal, and it can be understood that the terminal in the present disclosure can be considered as the user equipment.

The user equipment 110 can be equipment that provides voice and/or data connectivity to a user. The user equipment 110 can communicate with one or more core networks via a Radio Access Network (RAN). The user equipment 110 can be an Internet of Things (IoT) user equipment, for example, a sensor device, a mobile phone, and a computer with IoT user equipment, such as fixed, portable, pocket, handheld, computer built-in, or vehicle mounted devices. For example, stations (STA), subscriber units, subscriber stations, mobile stations, mobiles, remote stations, access points, remote terminals, access terminals, user terminals, user agents, user devices or user side devices. Alternatively, the user equipment 110 can also be a device for unmanned aerial vehicles. Alternatively, the user equipment 110 can also be an onboard device, such as a trip computer with wireless communication capability or wireless user equipment connected to an external trip computer. Alternatively, the user equipment 110 can also be a roadside device, such as a street light, a signal light, or other roadside devices with the wireless communication function, etc.

The base station 120 can be a network side device in the wireless communication system. The wireless communication system can be the 4th generation (4G) mobile communication system, also known as the Long Term Evolution (LTE) system. Alternatively, the wireless communication system can also be the 5th generation (5G) system, also known as the New Radio system or the 5G NR system. Alternatively, the wireless communication system can also be the next generation system following 5G system. The access network in 5G system can be referred to as the New Generation-Radio Access Network (NG-RAN).

The base station 120 can be the Evolved Node B (eNB) employed in the 4G system. Alternatively, the base station 120 can also be the next Generation Node B (gNB) constructed in a centralized and distributed architecture in the 5G system. When constructed in the centralized and distributed architecture, the base station 120 usually includes a central unit (CU) and at least two distributed units (DUs). The central unit is provided with protocol stacks for the Packet Data Convergence Protocol (PDCP) layer, the Radio Link Control (RLC) layer, and the Medium Access Control (MAC) layer. The distributed unit is provided with a protocol stack for the Physical (PHY) layer. Specific implementations of the base station 120 are not limited in embodiments of the present disclosure.

A wireless connection can be established between the base station 120 and the user equipment 110 via a wireless air interface. In different implementations, the wireless air interface is based on the 4th generation (4G) mobile communication network technology standard. Alternatively, the wireless air interface is based on the 5th generation (5G) mobile communication network technology standard, for example, the wireless air interface is the New Radio. Alternatively, the wireless air interface can also be a wireless air interface based on the next generation mobile communication network technology standard following 5G.

In some embodiments, the End to End (E2E) connection can also be established between user equipment 110. For example, in the Vehicle to Everything (V2X) communication, there are scenarios such as Vehicle to Vehicle (V2V) communication, Vehicle to Infrastructure (V2I) communication, and Vehicle to Pedestrian (V2P) communication.

In some embodiments, the above-mentioned user equipment can be considered as the terminal devices in the following embodiments.

In some embodiments, the above-mentioned wireless communication system can include a network management device 130.

Some of the base stations 120 are respectively connected to the network management device 130. The network management device 130 can be a core network device in the wireless communication system, for example, the network management device 130 can be the Mobility Management Entity (MME) in the Evolved Packet Core (EPC). Alternatively, the network management device can also be other core network devices, such as the Service GateWay (SGW), the Public Data Network GateWay (PGW), the Policy and Charging Rules Function (PCRF), or the Home Subscriber Server (HSS), etc. Implementations of the network management device 130 are not limited in embodiments of the present disclosure.

For the convenience of those skilled in the art to understand the present disclosure, one or more embodiments are described in the present disclosure to clearly illustrate the technical solutions of the present disclosure. Those skilled in the art can understand that one or more embodiments provided in the present disclosure can be implemented separately, combined with methods of other embodiments in the present disclosure, or implemented separately or in combination with some methods in other related art, and the present disclosure does not limit this.

An explanation of the related scenarios will be provided in the following, for better understanding embodiments of the present disclosure.

In some embodiments, reference is made to FIG. 2, which illustrates a User Plane Protocol Stack for the Layer 2 (L2) UE-to-Network relay.

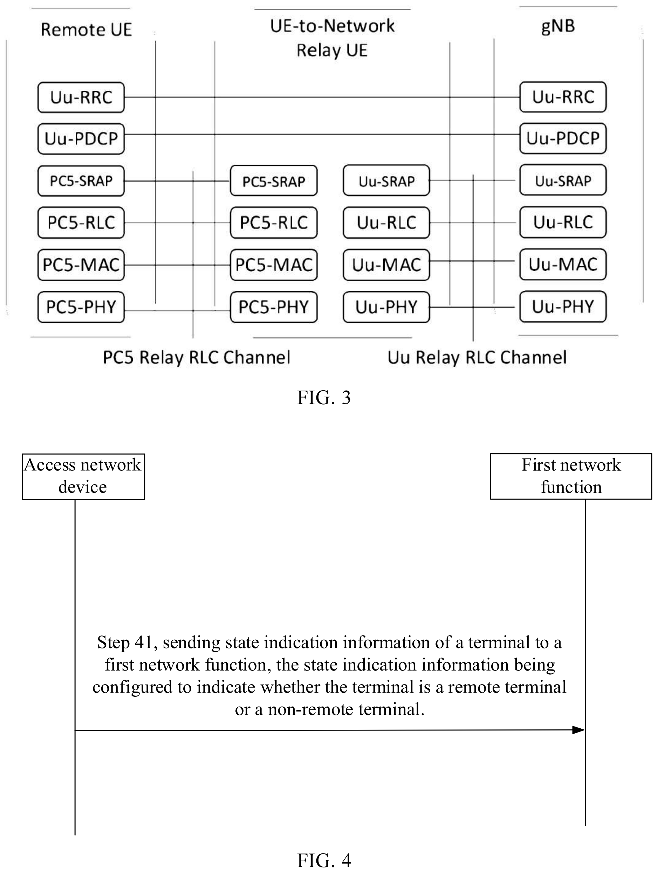

In some embodiments, reference is made to FIG. 3, which illustrates a Control Plane Protocol Stack for the Layer 2 (L2) UE-to-Network relay.

It should be noted that boxes in FIG. 2 and FIG. 3 represent protocol layers. For example, SDAP is the Service Data Adaptation Protocol layer, and PDCP is the Packet Data Convergence Protocol layer.

In some embodiments, for a remote terminal (UE), a base station (such as a gNB) can send the Radio Resource Control (RRC) message to the remote UE, but the gNB cannot send the Media Access Control (MAC) Control Element (CE) to the remote UE. When positioning the remote UE, this may result in some positioning functions not being available, such as not being able to configure aperiodic or semi-persistent Sounding Reference Signals (SRS) for the remote UE, not being able to configure the Positioning Reference Signal Processing Window (PPW, PRS Processing Window) for the remote UE, and not being able to configure the pre-configured Measurement Gap (MG) for positioning. Therefore, the present disclosure proposes that the remote UE can also send state indication information of the remote UE when reporting positioning capability information, that is, the remote UE informs the LMF that the UE is the remote UE. At the same time, it is also proposed that when the state of the remote UE transitions, for example, transitioning from a remote UE to a relay UE, the state indication information of the remote UE may also be sent to the LMF.

In some embodiments, in order to reduce the positioning latency, the Access and Mobility Management Function (AMF) can store the positioning capability of the UE, and then during the positioning process, the AMF sends the positioning capability information of the UE to the LMF (for example, the positioning capability information is included in the positioning request sent from the AMF to the LMF), so that the LMF does not need to obtain the positioning capability information of the UE again, achieving the goal of reducing the positioning latency.

It should be noted that the AMF stores the capability of the UE and sends the capability of the UE to the LMF, but the LMF does not obtain the latest remote UE state indication information from the UE. Alternatively, during the inactive positioning process of Mobile Terminated Location Request (MT-LR), if the state of the remote UE changes (for example, in a periodic positioning scenarios, it is of high possibility for the remote UE to change its state), the LMF may not obtain from the UE the latest state indication information of the remote UE, resulting in that the LMF does not know that the terminal's state has changed.

As shown in FIG. 4, embodiments of the present disclosure provide an information indication method, the method is performed by an access network device, and the method includes following steps.

In step 41, state indication information of a terminal is sent to a first network function.

The state indication information is configured to indicate whether the terminal is a remote terminal or a non-remote terminal.

The terminal involved in the present disclosure can include, but is not limited to, a mobile phone, a wearable device, an on-board terminal, a road side unit (RSU), a smart home terminal, an industrial sensing device and/or a medical device, etc. In some embodiments, the terminal can be a Redcap terminal or a predetermined version of a new radio (NR) terminal (e.g. R17 NR terminal).

The access network device involved in the present disclosure can be various types of base stations, such as the base station in the 3rd generation (3G) mobile communication network, the eNB in the 4th generation (4G) mobile communication network, the gNB in the 5th generation (5G) mobile communication network, or other evolved base stations.

The first network function involved in the present disclosure can be, but is not limited to, the LMF, and can also be other network functions.

The non-remote terminal in the present disclosure can be a relay terminal or a general terminal. The terminal being a remote terminal can be understood as that the terminal is in a first state, and the terminal being a non-remote terminal can be understood as that the terminal is in a second state.

In some embodiments, the state indication information of the terminal is sent to the first network function through an NR Positioning Protocol A (NRPPa) message associated with the terminal. The state indication information is configured to indicate whether the terminal is a remote terminal or a non-remote terminal.

In some embodiments, the state indication information is sent to the first network function through a positioning information response message, and the state indication information is configured to indicate whether the terminal is a remote terminal or a non-remote terminal.

In some embodiments, in response to receiving a first positioning information request message sent by the first network function and in response to the terminal being a remote terminal, the state indication information is sent to the first network function through a positioning information response message, and the state indication information is configured to indicate that the terminal is a remote terminal.

In some embodiments, the first positioning information request message sent by the first network function is received, and the first positioning information request message is used to request configuring a periodic uplink positioning reference signal. The state indication information is sent to the first network function through a positioning information response message, and the state indication information is configured to indicate whether the terminal is a remote terminal or a non-remote terminal.

The uplink positioning reference signal in the present disclosure can be the Sounding Reference Signal (SRS).

In some embodiments, the state indication information is sent to the first network function through a positioning information update message, and the state indication information is configured to indicate whether the terminal is a remote terminal or a non-remote terminal.

In some embodiments, in response to determining that the terminal has transitioned from a state of being a non-remote terminal to a state of being a remote terminal and in response to updating the uplink positioning reference signal of the terminal, the state indication information is sent to the first network function through a positioning information update message, and the state indication information is configured to indicate that the terminal is a remote terminal.

In some embodiments, in response to determining that the terminal has transitioned from a state of being a non-remote terminal to a state of being a remote terminal and in response to updating an aperiodic or a semi-persistent uplink positioning reference signal of the terminal to a periodic uplink positioning reference signal, the state indication information is sent to the first network function through the positioning information update message, and the state indication information is configured to indicate that the terminal is a remote terminal.

In some embodiments, in response to determining that the terminal has transitioned from a state of being a non-remote terminal to a state of being a remote terminal and in response to updating a periodic uplink positioning reference signal of the terminal that is based on a first configuration parameter to a periodic uplink positioning reference signal of the terminal that is based on a second configuration parameter, the state indication information is sent to the first network function through the positioning information update message, and the state indication information is configured to indicate that the terminal is a remote terminal. In some embodiments, the first configuration parameter and the second configuration parameter can include a cycle. For example, the first configuration parameter includes a first cycle, and the second configuration parameter includes a second cycle. In response to determining that the terminal has transitioned from a state of being a non-remote terminal to a state of being a remote terminal and in response to updating a periodic uplink positioning reference signal of the terminal that is based on a first cycle to a periodic uplink positioning reference signal that is based on a second cycle, the state indication information is sent to the first network function through the positioning information update message, and the state indication information is configured to indicate that the terminal is a remote terminal.

In some embodiments, the state indication information is sent to the first network function through a positioning information failure message, and the state indication information is configured to indicate whether the terminal is a remote terminal or a non-remote terminal.

In some embodiments, in response to receiving a second positioning information request message sent by the first network function and in response to determining that the terminal is a remote terminal, the state indication information is sent to the first network function through a positioning information failure message, the second positioning information request message is used to request configuring an aperiodic or a semi-persistent uplink positioning reference signal for the terminal, and the state indication information is configured to indicate that the terminal is a remote terminal.

In some embodiments, the second positioning information request message sent by the first network function is received, and the second positioning information request message is used to request configuring an aperiodic uplink positioning reference signal or a semi-persistent uplink positioning reference signal for the terminal. The state indication information is sent to the first network function through a positioning information failure message, and the state indication information is configured to indicate that the terminal is a remote terminal.

In some embodiments, the second positioning information request message sent by the first network function is received, and the second positioning information request message is used to request configuring an aperiodic uplink positioning reference signal or a semi-persistent uplink positioning reference signal for the terminal. The state indication information is sent to the first network function through a positioning information failure message, and the state indication information is configured to indicate that the terminal is a remote terminal. A third positioning information request message is received, and the third positioning information request message is used to request configuring a periodic uplink positioning reference signal for the terminal.

In some embodiments, the state indication information of the terminal is sent to the first network function through a measurement pre-configuration refuse message, and the state indication information is configured to indicate whether the terminal is a remote terminal or a non-remote terminal.

In some embodiments, in response to receiving a measurement pre-configuration request message sent by the first network function and in response to determining that the terminal is a remote terminal, the state indication information of the terminal is sent to the first network function through a measurement pre-configuration refuse message, the state indication information is configured to indicate that the terminal is a remote terminal, and the measurement pre-configuration request message is used to request configuring a Positioning Reference Signal Processing Window (PPW) or a pre-configured Measurement Gap (MG) for the terminal.

In some embodiments, a measurement pre-configuration request message sent by the first network function is received, and the measurement pre-configuration request message is used to request configuring the PPW or the pre-configured Measurement Gap (MG) for the terminal. The state indication information of the terminal is sent to the first network function through a measurement pre-configuration refuse message, and the state indication information is configured to indicate that the terminal is a remote terminal.

In some embodiments, an information field of the positioning information failure message and/or an information field of the measurement pre-configuration refuse message includes a reason value information field, which indicates that the terminal is a remote terminal.

In embodiments of the present disclosure, the state indication information of the terminal is sent to the first network function, and the state indication information is configured to indicate whether the terminal is a remote terminal or a non-remote terminal. Due to the fact that the access network device will send the state indication information configured to indicate whether the terminal is a remote terminal or a non-remote terminal to the first network function, the first network function can determine the state of the terminal based on the state indication information after the state of the terminal changes, which can improve the reliability of the wireless positioning, compared to the situation where it cannot be determined whether the terminal is a remote terminal or a non-remote terminal during the wireless positioning process.

It should be noted that those skilled in the art can understand that the methods provided in embodiments of the present disclosure can be performed separately or together with some methods in embodiments of the present disclosure or some methods in the related art.

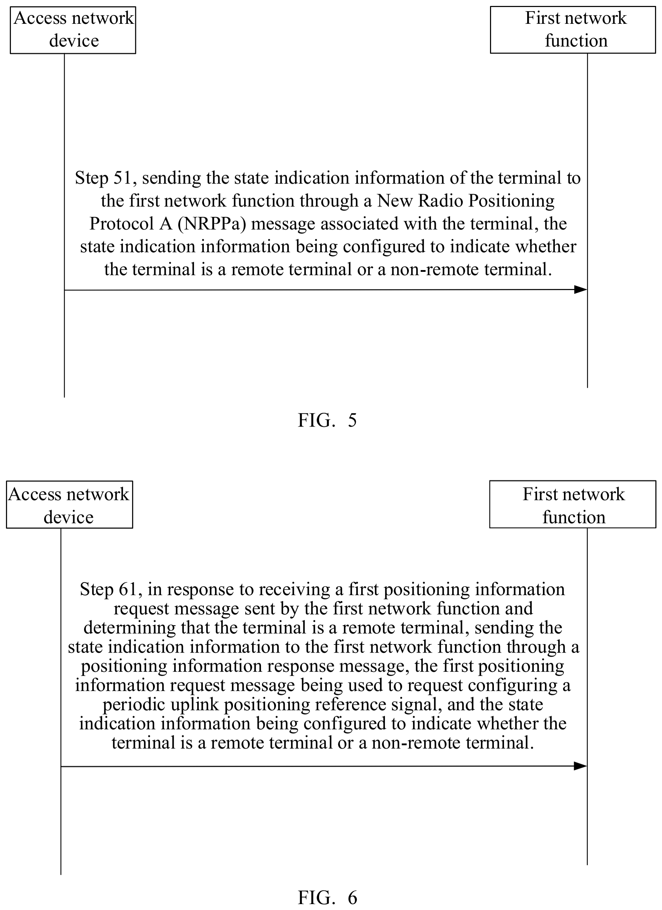

As shown in FIG. 5, embodiments of the present disclosure provide an information indication method, the method is performed by an access network device, and the method includes following steps.

In step 51, the state indication information of the terminal is sent to the first network function through a New Radio Positioning Protocol A (NRPPa) message associated with the terminal.

In the present disclosure, the state indication information is configured to indicate whether the terminal is a remote terminal or a non-remote terminal.

In some embodiments, the state indication information is sent to the first network function through a positioning information response message, and the state indication information is configured to indicate whether the terminal is a remote terminal or a non-remote terminal.

In some embodiments, the state indication information is sent to the first network function through a positioning information update message, and the state indication information is configured to indicate whether the terminal is a remote terminal or a non-remote terminal.

In some embodiments, the state indication information is sent to the first network function through a positioning information failure message, and the state indication information is configured to indicate whether the terminal is a remote terminal or a non-remote terminal.

In some embodiments, the state indication information of the terminal is sent to the first network function through a measurement pre-configuration refuse message, and the state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

As shown in FIG. 6, embodiments of the present disclosure provide an information indication method, the method is performed by an access network device, and the method includes following steps.

In step 61, in response to receiving a first positioning information request message sent by the first network function and in response to determining that the terminal is a remote terminal, the state indication information is sent to the first network function through a positioning information response message.

In the present disclosure, the first positioning information request message is used to request configuring a periodic uplink positioning reference signal, and the state indication information is configured to indicate whether the terminal is a remote terminal or a non-remote terminal.

In some embodiments, the first positioning information request message sent by the first network function is received, and the first positioning information request message is used to request configuring a periodic uplink positioning reference signal. The state indication information is sent to the first network function through a positioning information response message, and the state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

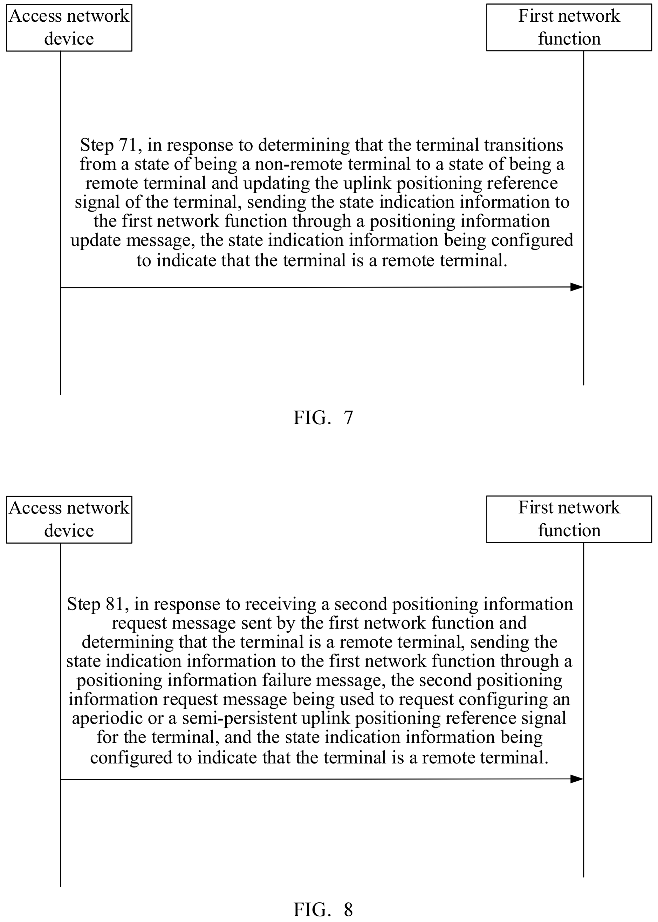

As shown in FIG. 7, embodiments of the present disclosure provide an information indication method, the method is performed by an access network device, and the method includes following steps.

In step 71, in response to determining that the terminal transitions from a state of being a non-remote terminal to a state of being a remote terminal and in response to updating the uplink positioning reference signal of the terminal, the state indication information is sent to the first network function through a positioning information update message.

The state indication information is configured to indicate that the terminal is a remote terminal.

In some embodiments, in response to the terminal transitioning from a state of being a non-remote terminal to a state of being a remote terminal and in response to updating an aperiodic or a semi-persistent uplink positioning reference signal of the terminal to a periodic uplink positioning reference signal, the state indication information is sent to the first network function through the positioning information update message, and the state indication information is configured to indicate that the terminal is a remote terminal.

In some embodiments, in response to the terminal transitioning from a state of being a non-remote terminal to a state of being a remote terminal and in response to updating a periodic uplink positioning reference signal of the terminal that is based on a first configuration parameter to a periodic uplink positioning reference signal of the terminal that is based on a second configuration parameter, the state indication information is sent to the first network function through the positioning information update message, and the state indication information is configured to indicate that the terminal is a remote terminal. In some embodiments, the first configuration parameter and the second configuration parameter can include a cycle. For example, the first configuration parameter includes a first cycle, and the second configuration parameter includes a second cycle. In response to determining that the terminal transitions from a state of being a non-remote terminal to a state of being a remote terminal and in response to updating a periodic uplink positioning reference signal of the terminal that is based on a first cycle to a periodic uplink positioning reference signal that is based on a second cycle, the state indication information is sent to the first network function through the positioning information update message, and the state indication information is configured to indicate that the terminal is a remote terminal.

It should be noted that those skilled in the art can understand that the methods provided in embodiments of the present disclosure can be performed separately or together with some methods in embodiments of the present disclosure or some methods in the related art.

As shown in FIG. 8, embodiments of the present disclosure provide an information indication method, the method is performed by an access network device, and the method includes following steps.

In step 81, in response to receiving a second positioning information request message sent by the first network function and in response to determining that the terminal is a remote terminal, the state indication information is sent to the first network function through a positioning information failure message.

The second positioning information request message is used to request configuring an aperiodic or a semi-persistent uplink positioning reference signal for the terminal, and the state indication information is configured to indicate that the terminal is a remote terminal.

In some embodiments, the second positioning information request message sent by the first network function is received, and the second positioning information request message is used to request configuring an aperiodic uplink positioning reference signal or a semi-persistent uplink positioning reference signal for the terminal. The state indication information is sent to the first network function through a positioning information failure message, and the state indication information is configured to indicate that the terminal is a remote terminal.

In some embodiments, the second positioning information request message sent by the first network function is received, and the second positioning information request message is used to request configuring an aperiodic uplink positioning reference signal or a semi-persistent uplink positioning reference signal for the terminal. The state indication information is sent to the first network function through a positioning information failure message, and the state indication information is configured to indicate that the terminal is a remote terminal. A third positioning information request message is received, and the third positioning information request message is used to request configuring a periodic uplink positioning reference signal for the terminal.

In some embodiments, an information field of the positioning information failure message includes a reason value information field, which indicates that the terminal is a remote terminal.

It should be noted that those skilled in the art can understand that the methods provided in embodiments of the present disclosure can be performed separately or together with some methods in embodiments of the present disclosure or some methods in the related art.

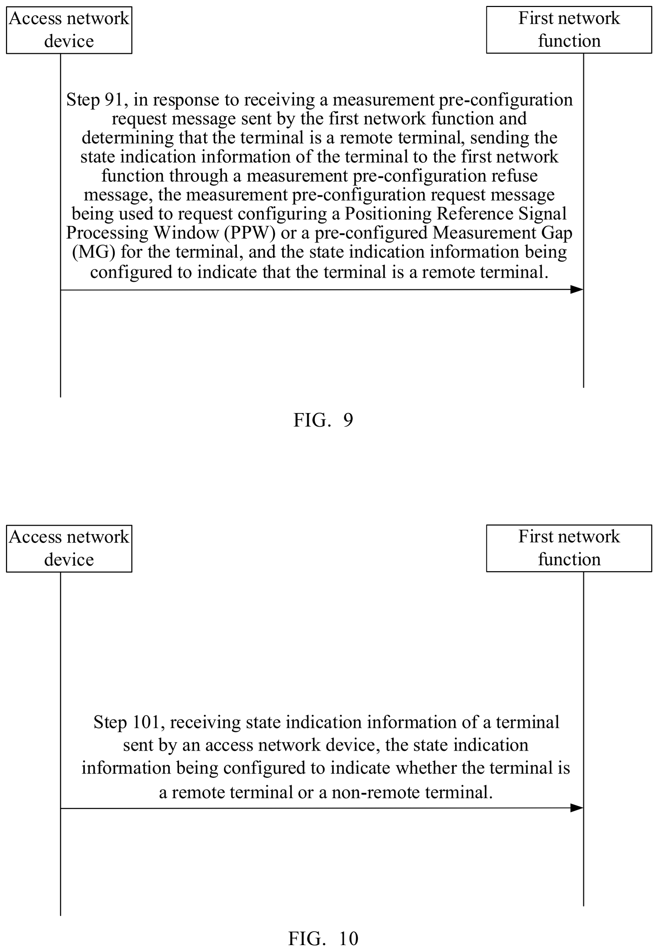

As shown in FIG. 9, embodiments of the present disclosure provide an information indication method, the method is performed by an access network device, and the method includes following steps.

In step 91, in response to receiving a measurement pre-configuration request message sent by the first network function and in response to determining that the terminal is a remote terminal, the state indication information of the terminal is sent to the first network function through a measurement pre-configuration refuse message.

In some embodiments, the measurement pre-configuration request message is used to request configuring a Positioning Reference Signal Processing Window (PPW) or a pre-configured Measurement Gap (MG) for the terminal, and the state indication information is configured to indicate that the terminal is a remote terminal.

In some embodiments, a measurement pre-configuration request message sent by the first network function is received, and the measurement pre-configuration request message is used to request configuring the PPW or the pre-configured Measurement Gap (MG) for the terminal. The state indication information of the terminal is sent to the first network function through a measurement pre-configuration refuse message, and the state indication information is configured to indicate that the terminal is a remote terminal.

In some embodiments, an information field of the measurement pre-configuration refuse message includes a reason value information field, which indicates that the terminal is a remote terminal.

It should be noted that those skilled in the art can understand that the methods provided in embodiments of the present disclosure can be performed separately or together with some methods in embodiments of the present disclosure or some methods in the related art.

As shown in FIG. 10, embodiments of the present disclosure provide an information indication method, the method is performed by a first network function, and the method includes following steps.

In step 101, state indication information of a terminal sent by an access network device is received.

In the present disclosure, the state indication information is configured to indicate whether the terminal is a remote terminal or a non-remote terminal.

The terminal involved in the present disclosure can include, but is not limited to, a mobile phone, a wearable device, an on-board terminal, a road side unit (RSU), a smart home terminal, an industrial sensing device and/or a medical device, etc. In some embodiments, the terminal can be a Redcap terminal or a predetermined version of a new radio (NR) terminal (e.g. R17 NR terminal).

The access network device involved in the present disclosure can be various types of base stations, such as the base station in the 3rd generation (3G) mobile communication network, the eNB in the 4th generation (4G) mobile communication network, the gNB in the 5th generation (5G) mobile communication network, or other evolved base stations.

The first network function involved in the present disclosure can be, but is not limited to, the LMF, and can also be other network functions.

The non-remote terminal in the present disclosure can be a relay terminal or a general terminal. The terminal being a remote terminal can be understood as that the terminal is in a first state, and the terminal being a non-remote terminal can be understood as that the terminal is in a second state.

In some embodiments, the state indication information of the terminal sent by the access network device is received through an NR Positioning Protocol A (NRPPa) message associated with the terminal. The state indication information is configured to indicate whether the terminal is a remote terminal or a non-remote terminal.

In some embodiments, the state indication information of the terminal sent by the access network device is received through a positioning information response message, and the state indication information is configured to indicate whether the terminal is a remote terminal or a non-remote terminal.

In some embodiments, a first positioning information request message is sent to the access network device, and the first positioning information request message is used to request configuring a periodic uplink positioning reference signal. The state indication information of the terminal sent by the access network device is received through a positioning information response message, and the state indication information is configured to indicate whether the terminal is a remote terminal or a non-remote terminal.

The uplink positioning reference signal in the present disclosure can be the Sounding Reference Signal (SRS).

In some embodiments, the state indication information of the terminal sent by the access network device is received through a positioning information update message, and the state indication information is configured to indicate whether the terminal is a remote terminal or a non-remote terminal.

In some embodiments, the state indication information of the terminal sent by the access network device is received through a positioning information failure message, and the state indication information is configured to indicate whether the terminal is a remote terminal or a non-remote terminal.

In some embodiments, a second positioning information request message is sent to the access network device, and the second positioning information request message is used to request the access network device to configure an aperiodic uplink positioning reference signal or a semi-persistent uplink positioning reference signal for the terminal. The state indication information of the terminal sent by the access network device is received through the positioning information failure message, and the state indication information is configured to indicate that the terminal is a remote terminal.

In some embodiments, a second positioning information request message is sent to the access network device, and the second positioning information request message is used to request the access network device to configure an aperiodic uplink positioning reference signal or a semi-persistent uplink positioning reference signal for the terminal. The state indication information of the terminal sent by the access network device is received through the positioning information failure message, the state indication information is configured to indicate that the terminal is a remote terminal. A third positioning information request message is sent to the access network device, and the third positioning information request message is used to request configuring a periodic uplink positioning reference signal for the terminal.

In some embodiments, the state indication information of the terminal sent by the access network device is received through a measurement pre-configuration refuse message, and the state indication information is configured to indicate whether the terminal is a remote terminal or a non-remote terminal.

In some embodiments, a measurement pre-configuration request message is sent to the access network device, and the measurement pre-configuration request message is used to request the access network device to configure a PPW or a pre-configured Measurement Gap (MG) for the terminal. The state indication information of the terminal sent by the access network device is received through a measurement pre-configuration refuse message, and the state indication information is configured to indicate that the terminal is a remote terminal.

In some embodiments, an information field of the positioning information failure message and/or an information field of the measurement pre-configuration refuse message includes a reason value information field, which indicates that the terminal is a remote terminal.

It should be noted that those skilled in the art can understand that the methods provided in embodiments of the present disclosure can be performed separately or together with some methods in embodiments of the present disclosure or some methods in the related art.

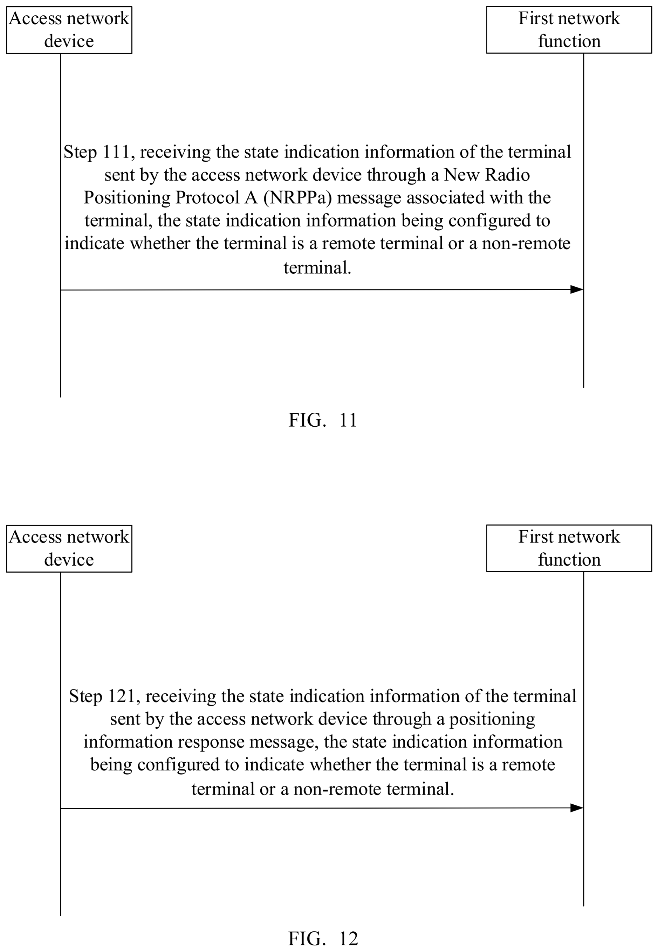

As shown in FIG. 11, embodiments of the present disclosure provide an information indication method, the method is performed by a first network function, and the method includes following steps.

In step 111, the state indication information of the terminal sent by the access network device is received through a New Radio Positioning Protocol A (NRPPa) message associated with the terminal.

In the present disclosure, the state indication information is configured to indicate whether the terminal is a remote terminal or a non-remote terminal.

In some embodiments, the state indication information of the terminal sent by the access network device is received through a positioning information response message, and the state indication information is configured to indicate whether the terminal is a remote terminal or a non-remote terminal.

In some embodiments, the state indication information of the terminal sent by the access network device is received through a positioning information update message, and the state indication information is configured to indicate whether the terminal is a remote terminal or a non-remote terminal.

In some embodiments, the state indication information of the terminal sent by the access network device is received through a positioning information failure message, and the state indication information is configured to indicate whether the terminal is a remote terminal or a non-remote terminal.

In some embodiments, the state indication information of the terminal sent by the access network device is received through a measurement pre-configuration refuse message, and the state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

As shown in FIG. 12, embodiments of the present disclosure provide an information indication method, the method is performed by a first network function, and the method includes following steps.

In step 121, the state indication information of the terminal sent by the access network device is received through a positioning information response message.

In the present disclosure, the state indication information is configured to indicate whether the terminal is a remote terminal or a non-remote terminal.

In some embodiments, a first positioning information request message is sent to the access network device, and the first positioning information request message is used to request configuring a periodic uplink positioning reference signal. The state indication information of the terminal sent by the access network device is received through the positioning information response message, and the state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

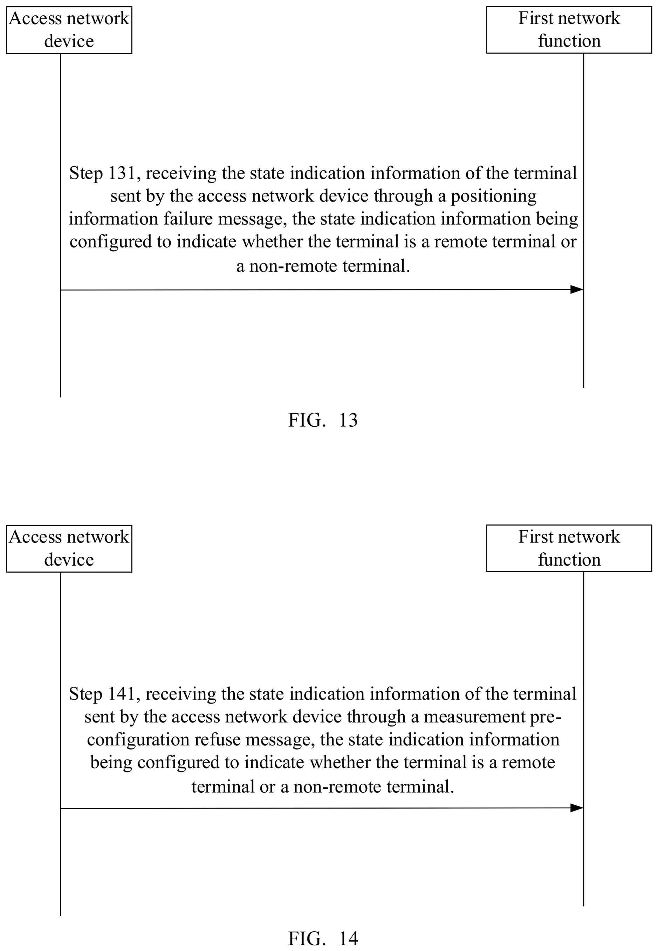

As shown in FIG. 13, embodiments of the present disclosure provide an information indication method, the method is performed by a first network function, and the method includes following steps.

In step 131, the state indication information of the terminal sent by the access network device is received through a positioning information failure message;

In the present disclosure, the state indication information is configured to indicate whether the terminal is a remote terminal or a non-remote terminal.

In some embodiments, a second positioning information request message is sent to the access network device, and the second positioning information request message is used to request configuring an aperiodic uplink positioning reference signal or a semi-persistent uplink positioning reference signal for the terminal. The state indication information of the terminal sent by the access network device is received through a positioning information failure message, and the state indication information is configured to indicate that the terminal is a remote terminal.

In some embodiments, a second positioning information request message is sent to the access network device, and the second positioning information request message is used to request configuring an aperiodic uplink positioning reference signal or a semi-persistent uplink positioning reference signal for the terminal. The state indication information of the terminal sent by the access network device is received through a positioning information failure message, and the state indication information is configured to indicate that the terminal is a remote terminal. A third positioning information request message is sent to the access network device, and the third positioning information request message is used to request configuring a periodic uplink positioning reference signal for the terminal.

In some embodiments, an information field of the positioning information failure message includes a reason value information field, which indicates that the terminal is a remote terminal.

It should be noted that those skilled in the art can understand that the methods provided in embodiments of the present disclosure can be performed separately or together with some methods in embodiments of the present disclosure or some methods in the related art.

As shown in FIG. 14, embodiments of the present disclosure provide an information indication method, the method is performed by a first network function, and the method includes following steps.

In step 141, the state indication information of the terminal sent by the access network device is received through a measurement pre-configuration refuse message.

In the present disclosure, the state indication information is configured to indicate whether the terminal is a remote terminal or a non-remote terminal.

In some embodiments, a measurement pre-configuration request message is sent to the access network device, and the measurement pre-configuration request message is used to request configuring a PPW or a pre-configured Measurement Gap (MG) for the terminal. The state indication information of the terminal sent by the access network device is received through a measurement pre-configuration refuse message, and the state indication information is configured to indicate that the terminal is a remote terminal.

In some embodiments, an information field of the measurement pre-configuration refuse message includes a reason value information field, which indicates that the terminal is a remote terminal.

It should be noted that those skilled in the art can understand that the methods provided in embodiments of the present disclosure can be performed separately or together with some methods in embodiments of the present disclosure or some methods in the related art.

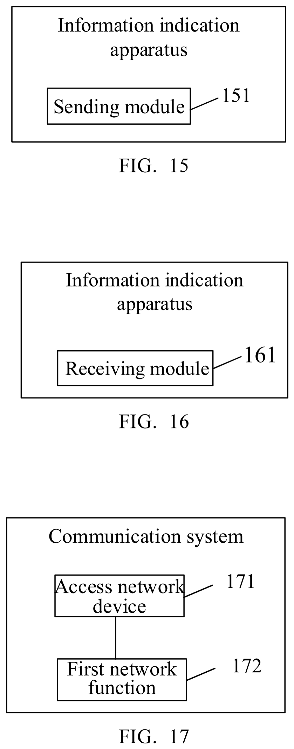

As shown in FIG. 15, embodiments of the present disclosure provide an information indication apparatus, and the apparatus includes a sending module 151.

The sending module 151 is configured to send state indication information of a terminal to a first network function.

The state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

As shown in FIG. 16, embodiments of the present disclosure provide an information indication apparatus, and the apparatus includes a receiving module 161.

The receiving module 161 is configured to receive state indication information of a terminal sent by an access network device.

The state indication information is configured to indicate whether the terminal is a remote terminal or a non-remote terminal.

It should be noted that those skilled in the art can understand that the methods provided in embodiments of the present disclosure can be performed separately or together with some methods in embodiments of the present disclosure or some methods in the related art.

As shown in FIG. 17, embodiments of the present disclosure provide a communication system, which includes an access network device 171 and a first network function 172. The access network device 171 is configured to perform any one of the methods performed by the access network device 171 in embodiments of the present disclosure, and the first network function 172 is configured to perform any one of the methods performed by the first network function 172 in embodiments of the present disclosure.

In some embodiments, the access network device sends state indication information of a terminal to the first network function, and the state indication information is configured to indicate whether the terminal is a remote terminal or a non-remote terminal. The first network function receives the state indication information of the terminal sent by the access network device, and the state indication information is configured to indicate whether the terminal is a remote terminal or a non-remote terminal.

In some embodiments, the state indication information can be included in one of the following messages: the positioning information response message, the positioning information update message, the positioning information failure message, and the measurement pre-configuration refuse message.

Embodiments of the present disclosure provide a communication device. The communication device includes a processor and a memory used to store executable instructions for the processor.

In some embodiments, the processor is configured to execute the executable instructions to perform the method in any embodiment of the present disclosure.

In some embodiments, the processor can include various types of storage media, the storage media are non-transitory computer storage media that can continue to remember and store information on the non-transitory computer storage media after losing power.

The processor can be connected to the memory through a bus or other means to read executable programs stored on the memory.

Embodiments of the present disclosure also provide a computer storage medium, the computer storage medium stores a computer executable program, and when the executable program is executed by a processor, the method in any embodiment of the present disclosure is implemented.

Regarding the apparatus/device in the above embodiments, the specific ways in which each module performs operations have been described in detail in relevant method embodiments, and will not be elaborated here.

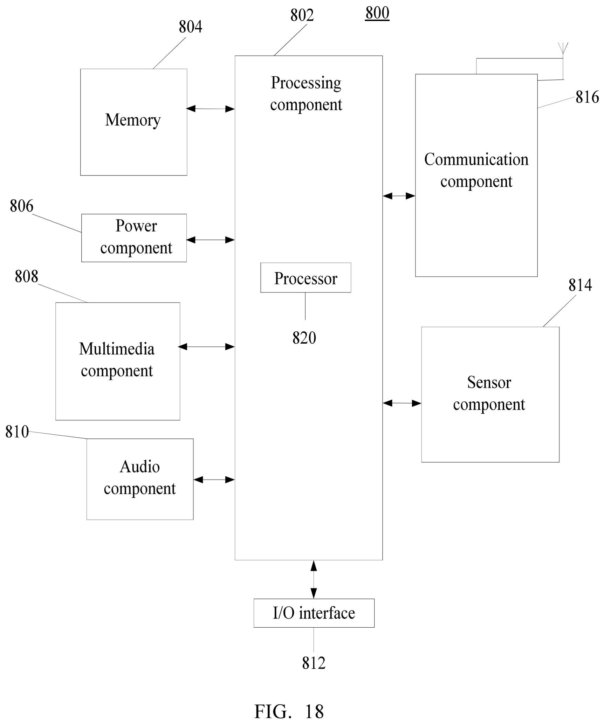

As shown in FIG. 18, the present disclosure provides a structure of a terminal.

Embodiments of the present disclosure provide a terminal 800. As shown in FIG. 18, the terminal 800 can be, for example, a mobile phone, a computer, a digital broadcasting terminal, a messaging device, a game console, a tablet device, a medical device, a fitness device, a personal digital assistant, etc.

As shown in FIG. 18, the terminal 800 can include at least one of the following components: a processing component 802, a memory 804, a power component 806, a multimedia component 808, an audio component 810, an input/output (I/O) interface 812, a sensor component 814, and a communication component 816.

The processing component 802 typically controls the overall operation of the terminal 800, such as operations associated with display, telephone call, data communication, camera operation, and recording operations. The processing component 802 may include one or more processors to execute instructions to complete all or part of the methods described above. In addition, the processing component 802 may include one or more modules to facilitate interactions between the processing component 802 and other components. For example, the processing component 802 may include a multimedia module to facilitate the interaction between the multimedia component 808 and the processing component 802.

The memory 804 is configured to store various types of data to support operations on the terminal 800. Examples of such data include instructions, contact data, phone book data, messages, pictures, videos, and the like for any application or method operating on the terminal 800. The memory 804 can be implemented by any type of volatile or non-volatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 806 provides power for various components of the terminal 800. The power component 806 can include a power management system, one or more power supplies, and other components associated with generating, managing, and distributing power for the terminal 800.

The multimedia component 808 includes a display screen providing an output interface between the terminal 800 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 808 includes a front camera and/or a rear camera. When the terminal 800 is in operation mode, such as shooting mode or video mode, the front camera and/or rear camera can receive external multimedia data. Each front camera and rear camera can be a fixed optical lens system or have focal length and optical zoom capability.

The audio component 810 is configured to output and/or input audio signals. For example, the audio component 810 includes a microphone (MIC), which is configured to receive an external audio signal when the terminal 800 is in an operation mode, such as a calling mode, a recording mode, and a voice recognition mode. The received audio signal may be further stored in memory 804 or transmitted via communication component 816. In some embodiments, the audio component 810 also includes a speaker for outputting audio signals.

The I/O interface 812 provides an interface between the processing component 802 and peripheral interface modules, which can be a keyboard, click wheel, button, etc. These buttons may include, but are not limited to, the Home button, Volume button, Start button, and Lock button.

The sensor component 814 includes one or more sensors for providing various aspects of condition evaluation for the terminal 800. For example, the sensor component 814 can detect an open/closed state of the terminal 800, relative positioning of the components. The component is, for example, a display and a keypad of the terminal 800. The sensor component 814 can also detect changes in the position of the terminal 800 or one component of the terminal 800, presence or absence of the user's contact with the terminal 800, orientation or acceleration/deceleration of the terminal 800 and temperature change of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access wireless networks based on communication standards, such as Wi-Fi, 2G or 3G, or a combination thereof. In some embodiments, the communication component 816 receives a broadcast signal or broadcast related information from an external broadcast management system via a broadcast channel. In some embodiments, the communication component 816 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In some embodiments, the terminal 800 can be implemented through one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for implementing above methods.

In some embodiments, a non-transitory computer-readable storage medium including instructions is also provided, such as a memory 804 including instructions, which can be executed by the processor 820 of the terminal 800 to complete above methods. For example, the non-transitory computer-readable storage medium can be ROM, random access memory (RAM), CD-ROM, tapes, floppy disks, optical data storage devices, etc.

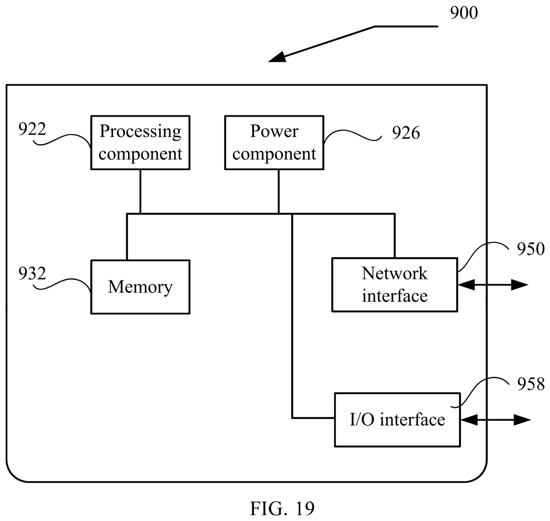

As shown in FIG. 19, embodiments of the present disclosure provide a structure of a base station. In some embodiments, the base station 900 can be provided as a network-side device. As shown in FIG. 19, the base station 900 includes a processing component 922, which further includes one or more processors, as well as memory resources represented by the memory 932, for storing instructions that can be executed by the processing component 922, such as application programs. The application program stored in the memory 932 can include one or more modules each corresponding to a set of instructions. In addition, the processing component 922 is configured to execute instructions to perform any of the methods previously applied to the base station.

The base station 900 can also include a power component 926 configured to perform power management for the base station 900, a wired or wireless network interface 950 configured to connect the base station 900 to the network, and an input/output (I/O) interface 958. The base station 900 can operate operating systems stored on memory 932, such as Windows Server TM, Mac OS XTM, UnixTM, LinuxTM, FreeBSDTM, or similar.

After considering the specification and practices of the invention disclosed herein, those skilled in the art will easily come up with other implementation solutions of the present disclosure. The present disclosure intends to cover any variations, uses, or adaptive changes of the present disclosure, which follow the general principles of the present disclosure and include common knowledge or commonly used technical means in the art that are not disclosed in the present disclosure. The specification and embodiments are only considered as exemplary, and the true scope and spirit of the present disclosure are defined by appended claims.

It should be understood that embodiments of the present disclosure are not limited to the precise structure described in the above and shown in the drawings, and various modifications and changes can be made without departing from its scope. The scope of the present disclosure is limited only by the appended claims.

## Claims

1. An information indication method, performed by an access network device, the method comprising:
sending state indication information of a terminal to a first network function;
wherein the state indication information is configured to indicate whether the terminal is a remote terminal or a non-remote terminal.

2. The method according to claim 1, wherein sending the state indication information of the terminal to the first network function, comprises:
sending the state indication information of the terminal to the first network function through a New Radio Positioning Protocol A (NRPPa) message associated with the terminal.

3. The method according to claim 1, wherein sending the state indication information of the terminal to the first network function, comprises one of:
sending the state indication information to the first network function through a positioning information response message;
sending the state indication information to the first network function through a positioning information update message;
sending the state indication information to the first network function through a positioning information failure message; and
sending the state indication information of the terminal to the first network function through a measurement pre-configuration refuse message.

4. The method according to claim 3, wherein sending the state indication information to the first network function through the positioning information response message, comprises:
in response to receiving a first positioning information request message sent by the first network function and determining that the terminal is the remote terminal, sending the state indication information to the first network function through the positioning information response message;
wherein the first positioning information request message is used to request configuring a periodic uplink positioning reference signal.

5. The method according to claim 3, wherein sending the state indication information to the first network function through the positioning information update message, comprises:
in response to determining that the terminal transitions from a state of being the non-remote terminal to a state of being the remote terminal and updating an uplink positioning reference signal of the terminal, sending the state indication information to the first network function through the positioning information update message.

6. The method according to claim 3, wherein sending the state indication information to the first network function through the positioning information failure message, comprises:
in response to receiving a second positioning information request message sent by the first network function and determining that the terminal is the remote terminal, sending the state indication information to the first network function through the positioning information failure message;
wherein the second positioning information request message is used to request configuring an aperiodic uplink positioning reference signal or a semi-persistent uplink positioning reference signal for the terminal.

7. The method according to claim 6, further comprising:
receiving a third positioning information request message sent by the first network function;
wherein the third positioning information request message is used to request configuring a periodic uplink positioning reference signal for the terminal.

8. The method according to claim 3, wherein sending the state indication information of the terminal to the first network function through the measurement pre-configuration refuse message, comprises:
in response to receiving a measurement pre-configuration request message sent by the first network function and determining that the terminal is the remote terminal, sending the state indication information of the terminal to the first network function through the measurement pre-configuration refuse message;
wherein the measurement pre-configuration request message is used to request configuring a Positioning Reference Signal Processing Window (PPW) or a pre-configured Measurement Gap (MG) for the terminal.

9. The method according to claim 3, wherein an information field of the positioning information failure message and/or an information field of the measurement pre-configuration refuse message comprises a reason value information field, and the reason value information field indicates that the terminal is the remote terminal.

10. The method according to any of claims 1 to 9, wherein the first network function is a Location Management Function (LMF).

11. An information indication method, performed by a first network function, the method comprising:
receiving state indication information of a terminal sent by an access network device;
wherein the state indication information is configured to indicate whether the terminal is a remote terminal or a non-remote terminal.

12. The method according to claim 11, wherein receiving the state indication information of the terminal sent by the access network device, comprises:
receiving the state indication information of the terminal sent by the access network device through an NRPPa message associated with the terminal.

13. The method according to claim 11, wherein receiving the state indication information of the terminal sent by the access network device, comprises one of:
receiving the state indication information of the terminal sent by the access network device through a positioning information response message;
receiving the state indication information of the terminal sent by the access network device through a positioning information update message;
receiving the state indication information of the terminal sent by the access network device through a positioning information failure message; and
receiving the state indication information of the terminal sent by the access network device through a measurement pre-configuration refuse message.

14. The method according to claim 13, wherein before receiving the state indication information of the terminal sent by the access network device through the positioning information response message, the method further comprises:
sending a first positioning information request message to the access network device;
wherein the first positioning information request message is used to request configuring a periodic uplink positioning reference signal.

15. The method according to claim 13, wherein before receiving the state indication information of the terminal sent by the access network device through the positioning information failure message, the method further comprises:
sending a second positioning information request message to the access network device;
wherein the second positioning information request message is used to request configuring an aperiodic uplink positioning reference signal or a semi-persistent uplink positioning reference signal for the terminal.

16. The method according to claim 15, further comprising:
sending a third positioning information request message to the access network device;
wherein the third positioning information request message is used to request configuring a periodic uplink positioning reference signal for the terminal.

17. The method according to claim 13, wherein before receiving the state indication information of the terminal sent by the access network device through the measurement pre-configuration refuse message, the method further comprises:
sending a measurement pre-configuration request message to the access network device;
wherein the measurement pre-configuration request message is used to request configuring a PPW or a pre-configured Measurement Gap (MG) for the terminal.

18. The method according to claim 13, wherein an information field of the positioning information failure message and/or an information field of the measurement pre-configuration refuse message comprises a reason value information field, and the reason value information field indicates that the terminal is the remote terminal.

19. The method according to any of claims 11 to 18, wherein the first network function is a Location Management Function (LMF).

20. An information indication apparatus, comprising:
a sending module configured to send state indication information of a terminal to a first network function;
wherein the state indication information is configured to indicate whether the terminal is a remote terminal or a non-remote terminal.

21. An information indication apparatus, comprising:
a receiving module configured to receive state indication information of a terminal sent by an access network device;
wherein the state indication information is configured to indicate whether the terminal is a remote terminal or a non-remote terminal.

22. A communication device, comprising:
an antenna;
a memory; and
a processor, connected to the antenna and the memory respectively, and configured to execute computer executable instructions stored on the memory to control transmission and reception of the antenna, to cause the method according to any of claims 1 to 10, or claims 11 to 19 to be performed.

23. A computer storage medium having computer executable instructions stored thereon, which when executed by a processor, cause the method according to any of claims 1 to 10, or claims 11 to 19 to be performed.

24. A communication system comprising an access network device and a first network function, wherein the access network device is configured to perform the method according to any of claims 1 to 10, and the first network function is configured to perform the method according to any of claims 11 to 19.
